# EUROPEAN PATENT SPECIFICATION

(11) **EP 1 131 721 B1**
(45) Date of publication and mention of the grant of the patent: **14.04.2004**
(21) Application number: 99970753.2
(22) Date of filing: 05.10.1999
(51) Int. Cl.: G06F 12/02

(54) **MEMORY MANAGEMENT UNIT FOR JAVA ENVIRONMENT COMPUTERS AND METHOD THEREFOR**
SPEICHERVERWALTUNGSEINHEIT FÜR JAVA-UMGEBUNGS-RECHNER UND VERFAHREN HIERFÜR
UNITE DE GESTION DE MEMOIRE POUR ORDINATEURS DANS UN ENVIRONNEMENT JAVA ET METHODE CORRESPONDANTE

(30) Priority: 21.10.1998 US 176530
(43) Date of publication of application: 12.09.2001
(73) Proprietor: SUN MICROSYSTEMS, INC., Palo Alto, California 94303 (US)
(72) Inventor: SHAYLOR, Nicholas, Newark, CA 94560 (US)
(74) Representative: Parkes, Andrew John Aykroyd
(86) International application number: PCT/US1999/023083
(87) International publication number: WO 2000/023897

(56) References cited:
- EP-A- 0 780 768
- US-A- 5 640 528
- US-A- 5 727 179

## Description

### BACKGROUND OF THE INVENTION

### 1. Field of the Invention.

The present invention relates, in general, to memory management, and, more particularly, to an apparatus and method for managing memory in a computer environment based on the JAVA programming language.

### 2. Relevant Background.

The JAVA™ (a trademark of Sun Microsystems, Inc.) programming language, is an object-oriented programming language developed by Sun Microsystems, Inc., the Assignee of the present invention. The JAVA programming language and programming environment shows promise as a language for applications in comparatively simple computer environments such as that found in embedded systems, network computers, and the like. In these simpler environments the computer system hardware is desirably less complex to decrease cost. For example, it is desirable in some applications to provide hardware with only rudimentary memory management functionality. In these systems, the operating system (OS) and/or application software desirably provide the memory management functionality removed from the hardware.

The JAVA programming environment, among others, can be implemented using a "virtual machine" that runs on top of the operating system, yet implements an application program interface (API) that provides many behaviors traditionally associated with an operating system. The virtual machine enables the application developer to target the application software for a single machine via the virtual machine's API, yet expect the application software to operate on a wide variety of platforms that implement the virtual machine. It is desirable to have the program functionality provided with as little reliance on the underlying hardware and operating system implementation as possible so that the program can be readily ported to other platforms.

One area in which the hardware is traditionally heavily relied on is memory management. The term "memory management" refers to a set of functions that allocate memory as required to efficiently execute an application. Because the memory required by an application is dynamic, (i.e., an application may require more memory than was initially allocated) the memory management system must be able to dynamically allocate available physical memory address space in a manner that prevents one application from expanding into and corrupting the physical address space used by another application. Conventional memory management architectures handle this dynamic allocation by relying on the hardware memory management unit (MMU) to flush and re-populate physical memory with required data, however, such operation can greatly impact memory performance.

The design of memory storage is critical to the performance of modem computer systems. In general, memory management involves circuitry and control software that store the state of a computer and programs executing on the computer. The term "memory management" has three distinct meanings in the computer industry: hardware memory management, operating system memory management, and application memory management. Hardware memory management involves hardware devices usually implemented in or closely coupled to a CPU such as memory management units (MMUs), single in line memory modules (SIMMs), RAM, ROM, MMUs, caches, translation lookaside buffers (TLBs), backing store, and processor registers, refresh circuitry and the like. Operating system (OS) memory management handles behavior implemented in the operating system including virtual memory, paging, segmentation, protection and the like. Application memory management handles behavior implement by application software for memory area allocation, object management, garbage collection, and debugging.

Applications principally use two dynamic memory structures: a stack and a heap. A stack is a data structure that allows data objects to be pushed onto the stack and popped off it in the reverse order from which they were pushed. Memory requirements for the stacks in a particular application are typically known when an application is compiled. The "heap" refers to memory that is allocated at run-time from a memory manager, which can be of run-time-determined size and lifetime. The heap is used for dynamically allocated memory, which is usually for blocks whose size, quantity, or lifetime could not be determined at compile time. The reclamation of objects on the heap can be managed manually, as in C, or automatically, as in the Java programming environment.

In EP-A-0 780 768, each user process that has access to the virtual hardware is also typically assigned a page size area of physical memory on the I/O adapter by performing an operating system request to open the I/O device adapter for access. The physical memory is then mapped into the virtual address space of the user process thereby allowing the user processes to directly program the I/O adapter without the overhead of the operpating system including context switches. By allocating memory in increments of the page size each user process is allowed to have a virtual hardware space that is secure from all other processes which might be sharing the same I/O device adapter.

In a conventional memory architecture the memory address space is divided into multiple pages. A particular program is assigned a number of pages of memory. When the program needs more memory, it can be allocated one or more additional pages. Because the pages allocated to a program do not have to be contiguous in physical memory, the program can be allocated additional memory so long as additional pages are available. Prior architectures rely heavily on the hardware MMU to handle this dynamic allocation of pages.

The memory management mechanisms operate in concert such that when data required by an application is not loaded in physical memory when demanded by the application, a "page fault" is generated which causes the operating system to "page in" the missing data. The hardware memory management mechanisms operate to determine the physical address of the missing data and load the data from slower memory or mass storage. In a cached memory system, the hardware memory management mechanisms attempt to keep the most likely to be used data in fast cache memory.

Paged virtual memory systems distinguish addresses used by programs (i.e., virtual addresses) from the real memory addresses (i.e., physical addresses). On every memory access the system translates a virtual address to a physical address. This indirection allows access to more memory than physically present, transparent relocation of program data, and protection between processes. A "page table" stores the virtual:physical address mapping information and a TLB caches recently used translations to accelerate the translation process.

A TLB comprises a number of entries where each entry holds a virtual:physical address mapping. The number of entries determines the maximum amount of address space that can be reached by the TLB. As programs become larger (i.e., require a larger amount of physical memory to hold the programs working set) and memory becomes less expensive, computer system manufacturers have increased the amount of physical memory available in computer systems. This trend places pressure on the TLB to map an increasingly larger amount of memory. When a required mapping is not in the TLB (i.e., a TLB miss), a TLB miss handler causes the retrieving of the required mapping from the page table. Programs incur a large number of TLB misses when their working set is larger than the TLB's reach. TLB miss handling typically requires multiple clock cycles and greatly impacts memory performance.

TLB performance is improved by increasing the number of entries in the TLB. However, fast memory cells required by a TLB consume a relatively large amount of chip area and available chip power. Also, large virtual and physical addresses (e.g., 64-bit addresses) increase the number of bits in each TLB entry, compounding the difficulty in adding more entries to the TLB. Moreover, as the TLB size increases, the access speed tends to decrease thereby lowering overall memory access speed.

A need exists for a memory architecture that avoids many of the design and performance limiting features of conventional memory management units. It is desirable to satisfy this need with a memory architecture that satisfies the dynamic memory requirements of programs with graceful performance degradation when memory is full.

### SUMMARY OF THE INVENTION

Briefly stated, the present invention, which is set out in the claims, involves a memory architecture, as well as a method, system and computer program product for maintaining a memory architecture, that treats physical memory as a single segment rather than multiple pages. A virtual memory address space is divided into two regions with a lower region being mapped directly to physical memory and each location of the physical memory being mapped to an aliased- virtual address in the upper section.

A method for managing memory in a computing system having a defined virtual address space and a physical memory. The virtual address space is partitioned into an upper portion and a lower portion. All of the physical memory is mapped to the lower half of the virtual address space. A task comprising code, static data, and heap structures is executed by copying all these data structures to a contiguous region of the physical memory. This region is mapped into a single segment that is mapped to the upper portion of the virtual address space. The segment can be expanded by mapping additional physical address space or by moving the entire task structure to a larger contiguous region of physical memory

The foregoing and other features, utilities and advantages of the invention will be apparent from the following more particular description of a preferred embodiment of the invention as illustrated in the accompanying drawings.

### BRIEF DESCRIPTION OF THE DRAWINGS

FIG. 1 shows in block diagram form a computer system embodying the apparatus, methods and devices in accordance with the present invention;
FIG. 2 shows a memory subsystem in accordance with the present invention in block diagram form;
FIG. 3 illustrates a memory mapping in accordance with the present invention;
FIG. 4 shows a first example of dynamic memory allocation in accordance with the present invention;
FIG. 5 illustrates a second example of dynamic memory allocation in accordance with the present invention;
FIG. 6 shows in simplified block diagram form significant components of a memory management device in accordance with the present invention; and
FIG. 7 illustrates a third example of dynamic memory allocation in accordance with the present invention.

### DETAILED DESCRIPTION OF THE PREFERRED EMBODIMENTS

The present invention is directed to memory management mechanisms and methods that can be readily implemented in a virtual machine, such as a JAVA virtual machine (JVM), to provide benefits of virtual memory management without reliance on memory management hardware to provide paging mechanisms. VMs have traditionally relied on the MMU hardware, to provide the benefits of paged virtual memory. By implementing the method and apparatus in accordance with the present invention, a simplified version of virtual memory management can be built into the VM thereby making the VM more portable and able to operate on platforms that do not provide virtual memory management.

To ease description and understanding the present invention is described in terms of a specific implementation having a 32-bit virtual address space defining 4 Gigabytes (GB) of virtual memory. The virtual address space is divided into two equally sized regions each having 2GB of the virtual address space. A lower 2GB region corresponds directly with physical memory 203 while an upper 2GB region comprises virtual memory that can be mapped to any arbitrary location in the lower 2GB region. While the amount of physical memory varies from computer to computer, it is typically no more than a few tens or perhaps a few hundred megabytes (MB). Regardless of the amount of physical memory, all of that physical memory is mapped directly to the lower address region.

The present invention is preferably implemented in a virtual machine operating on an arbitrary hardware/OS platform. In accordance with the present invention, the virtual machine relies minimally on the platform to perform memory management. Instead, the advantages of conventional paging systems are implemented by the task swapping method and mechanisms of the present invention described hereinbelow.

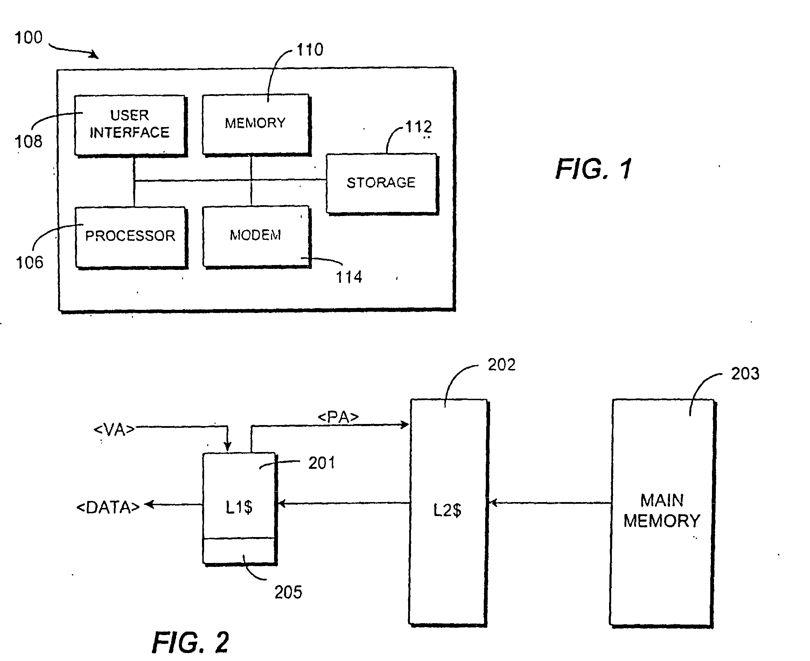

FIG. 1 illustrates a computer system 100 configured to implement the method and apparatus in accordance with the present invention. The computer system 100 has a processing unit 106 for executing program instructions that is coupled through a system bus to a user interface 108. User interface 108 includes available devices to display information to a user (e.g., a CRT or LCD display) as well as devices to accept information form the user (e.g., a keyboard, mouse, and the like).

A memory unit 110 (e.g., RAM, ROM, PROM and the like) stores data and instructions for program execution. As embodied in computer code, the present invention resides in memory unit 110 and storage unit 112. Moreover, the processes and methods in accordance with the present invention operate principally on memory unit 110. Storage unit 112 comprises mass storage devices (e.g., hard disks, CDROM, network drives and the like). Modem 114 converts data from the system bus to and from a format suitable for transmission across a network (not shown). Modem 114 is equivalently substituted by a network adapter or other purely digital or mixed analog-digital adapter for a communications network.

FIG. 2 illustrates a portion of memory unit 110 in greater detail. Memory unit 110 implements physical or real memory having a size or capacity determined by the physical size of main memory 203. Preferably, memory unit 110 comprises cached memory such that dynamically selected portions of the contents of main memory 203 are copied to one or more levels of smaller, faster cache memory such as level one cache (L1$) 201 and level 2 cache (L1$). 202. Any available cache architecture and operating methodology may be used except as detailed below.

In the particular example of FIG. 2, L1$ 201 is virtually addressed while L2$ 202 (if used) and main memory 203 are physically addressed. Virtual addresses generated by a program executing on processor 106 (shown in FIG. 1) are coupled directly to the address port of L1$ 201. When L1$ 201 contains valid data in a cache line corresponding to the applied virtual address, data is returned to processor 106 via a memory data bus. It should be understood that any number of cache levels may be used, including only one cache level (i.e., L1$ 201) as well as three or more cache levels.

The preferred implementation of L1$ 201 as a virtually addressed cache minimizes the address translation overhead needed to access data from the level one cache. While a physically addressed cache requires some form of relocation mechanism before it can be accessed, a virtually addressed L1$ only requires address translation where there is a miss in L1$ 201 will the virtual address need to be translated. L1$ 201 includes a number of cache lines 205 that are organized so as to hold both the corresponding virtual and physical addresses. This feature allows the L1$ 201 to snoop accesses to physical memory by CPU or direct memory access (DMA) in order to invalidate or modify cached memory when data is changed. As described below, virtual address translation register 205 is much smaller in capacity than conventional TLB structures because only a single virtual:physical address mapping needs to be held.

L1$ is sized appropriately so that typical program execution results in a desirably high cache hit rate. The characterization of caches and cache hit rate with cache size is well known, and the particular cache size chosen to implement the present invention is a matter of design choice and not a limitation of the invention. Larger caches can lead to better cache performance and so are recommended.

At any one time, L1$ 201 will hold a range of virtual addresses referred to as the "current virtual address space". In a particular example, it is assumed that desired data is currently in L1$ 201 so that data is accessed in an unchecked manner. Cache consistency is maintained in software executing in processor 106 (e.g., a Java virtual machine). Accesses to memory locations outside of the current virtual address space raise a trap in the virtual machine at the time the address translation is performed. This is an error condition that the virtual machine responds to by aborting the program. Preferably, L1$ 201 is organized such that each cache line includes state information to indicate, for example, whether the cache line is valid. This feature allows L1$ 201 to snoop accesses to physical memory by CPU or DMA access in order to invalidate or modify cache memory when it is changed.

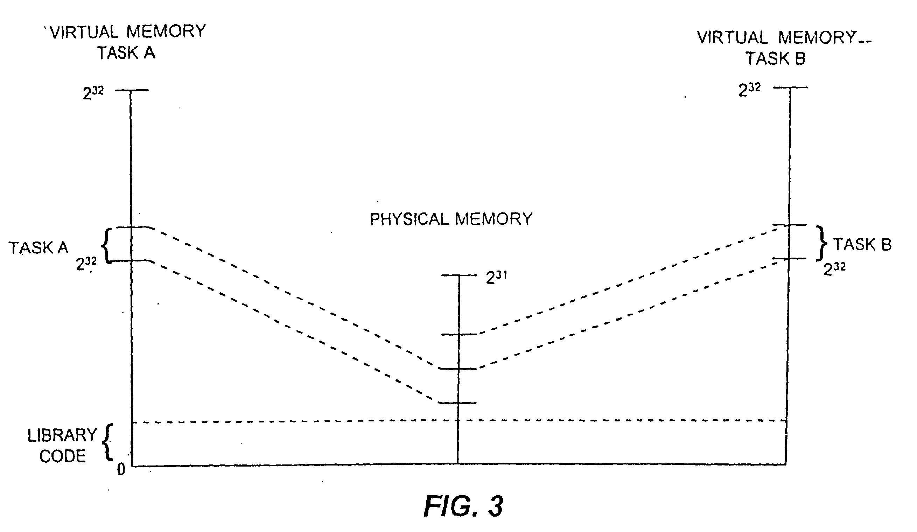

FIG. 3 graphically illustrates a virtual:physical address mapping in accordance with the present invention. As shown in FIG. 3, portions of a 32-bit virtual address space are allocated to a task A and a task B. Each task address space is mapped to a corresponding segment of the physical memory. The maximum physical memory capacity is one half that of the virtual address space as a result of allocating the upper half of the virtual address space for aliased mappings. In the particular example of FIG. 3, the lowest segment of physical address space is reserved for "library code" that is referred to by all executing programs including the virtual machine, and must be present for the virtual machine to operate. Above the library code segment the available physical memory can be allocated as desired to tasks. As shown, task A is allocated to a first segment above the library segment and task B is allocated to a task address space immediately above task A. The specific mapping of task A and task B is handled by the memory manager component in accordance with the present invention and implemented in a virtual machine in the particular example.

Significantly, physical memory in FIG. 3 is not paged. Task A and task B can be swapped out of physical memory as required and held in virtual memory by maintaining the virtual address allocation. Task A and/or task B can be moved within physical memory by changing the memory mapping (designated by dashed lines in FIG. 3). However, task A and task B are swapped or moved in their entirety and not on a page-by-page basis as in conventional memory management systems.

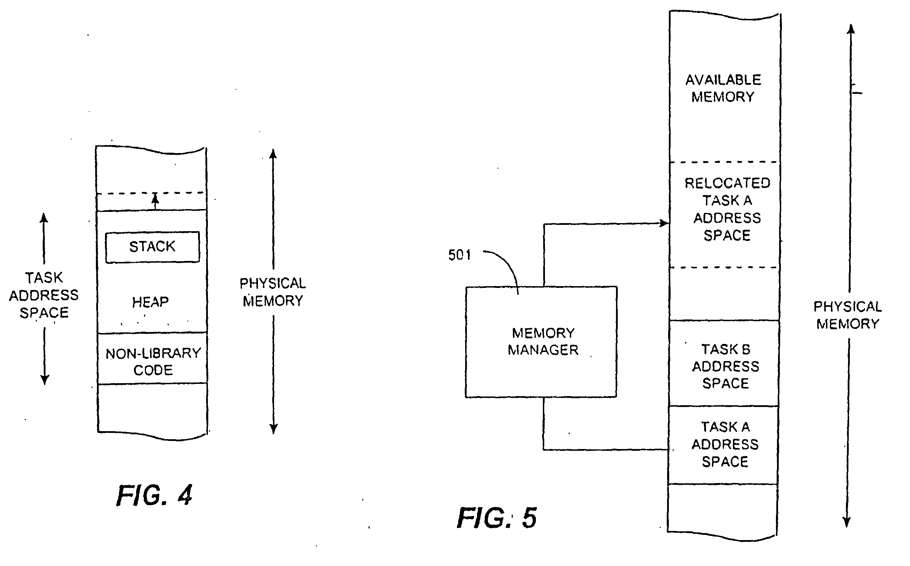

A typical application includes data structures shown in FIG. 4 including a heap data structure, a code data structure, and a stack data structure. All of these data structures must be present in physical memory for the task to execute. The present invention distinguishes between procedural code (e.g., C-language programs) and object-oriented code (e.g., JAVA language programs). For object-oriented code, most of the code is present in physical memory space library (labeled CODE in FIG. 4) and is addressed there directly. A task's non-library code, static data, and single heap component is allocated from addresses in physical memory space, but is also mapped into aliased virtual memory addresses in the upper portion of the virtual address space as shown in FIG. 3.

The heap component can dynamically change size while a task is executing. The task will request additional memory space for the heap and the memory manager in accordance with the present invention attempts to allocate the requested memory address space. In the event that the heap component needs to be expanded two conditions may exist. First, the physical address space immediately adjacent to the heap(e.g., immediately above task A or task B in FIG. 3) may be available in which case the heap component is simply expanded into the available address space as shown in FIG. 4. In this case, the memory mapping is altered to include the newly added physical memory addresses in the portion of physical memory allocated to the heap data structure.

In a second case, illustrated in FIG. 5, the address space immediately above the heap of task A is not available because it is occupied by task B. In this case, the entire segment is copied to another area of physical memory that is large enough to hold the expanded size. Memory manager 501 determines if a suitably sized segment of available memory exists, then copies all of the task A data structure in its entirety to the address space designated in FIG. 5 as the relocated task address space. In the second case, the virtual address mapping represented by the dashed arrows in FIG. 3 is altered to reflect the new heap location.

The main memory could require compacting for this to occur (i.e., in order to free a sufficiently large address space to hold the increased heap size), however, this should not be frequent and so is not expected to affect performance in a significant way. Compacting uses small amounts of unallocated physical address space that may exist. For example, the address space between task A and the library code segment in FIG. 3 can be used by moving task A downward to occupy memory immediately above the library code segment.

In accordance with the present invention, the virtual machine allocates the stack regions for object oriented tasks such as Java tasks from within the heap as shown in FIG. 4. In a preferred implementation, a stack pointer (not shown) is associated with the stack memory area. Associated with the stack pointer is a stack limit register (not shown) that is used to indicate (e.g., raise a trap) if more data is pushed onto the stack than can be accommodated by the current address space allocated to the stack. Stack area may also increase in size, for example, during iterative processes that create stack data structures each iteration. In accordance with the present invention, stack areas used for Java language threads can either be expanded when necessary by relocating the stack within the heap, or by implementing a "chunky" stack mechanism. This stack allocation system has the important quality of allowing several stacks to be created within one program.

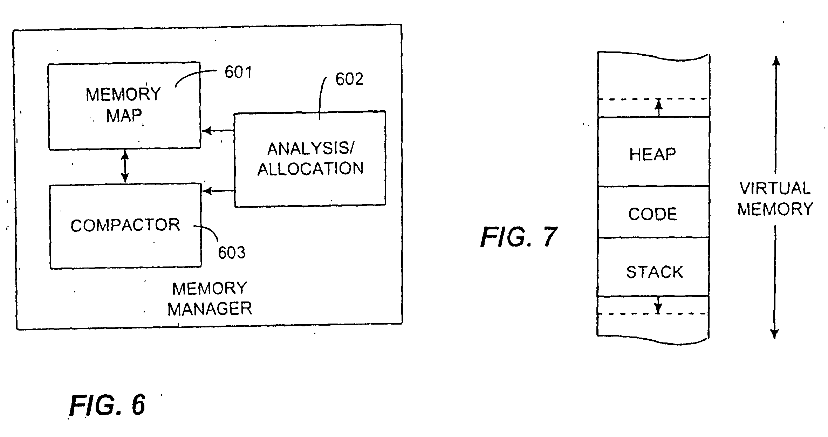

FIG. 6 shows basic devices, implemented as software code devices in a particular example, that handle memory management operations within memory manager 501. It should be understood that a typical memory manager 501 will include a number of other modules to provide conventional memory management operation, but for ease of understanding these conventional devices are not illustrated or described herein. Memory map 601 is a data structure that tracks which memory regions are assigned to which tasks and which physical memory is available for allocation. Analysis/allocation device 602 can monitor memory map 601 to determine if physical memory is available above a task's allocated address space for purposes of expanding/reallocating the task's heap address space. Analysis/allocation device 602 can also initiate compactor 603 to defragment physical memory as needed.

To ensure execution integrity, an executing task cannot write to memory address space that is allocated to another process. While a Java language task is executing it will normally (although not exclusively) use virtual addresses internally to refer to data objects in the stack and heap areas associated with that task. A task may invoke operating system resources in which case the OS typically uses real addresses. When the operating system API is called, all virtual addresses are translated into real addresses that are used throughout the operating system code. Virtual-to-physical translation is done only once very early on in processing. In this manner, virtual addresses are only used by the task whose context they belong in and execution integrity is ensured. In other words, a set of virtual addresses used by a given task will not, except as detailed below, refer to data locations that it does not own and so will not corrupt memory locations allocated to other tasks.

Occasionally, a task may use physical addresses to refer to data objects that were created outside of the task itself. For example, during I/O processing a first task, or driver may bring data in from, for example, a network connection, and store that data in a buffer created in physical memory. A second task will read the data from the buffer location directly and use the data. It is a useful optimization for the second task to refer to the physical address of the buffer location established by the first task to avoid copying the data from one task address space to another.

Allowing tasks to use real addresses in this manner works well in most of the JAVA language java.io classes. However, the software memory manager must be trusted to not allow a task to use physical addressing in a manner that would breach execution integrity. These tasks are referred to herein as "trusted tasks". A virtual machine in accordance with the present invention will be considered a trusted program. To handle untrusted tasks, the lower 2GB region (i.e., the real-address space) can be placed in read only mode while the untrusted task is executing.

Another useful implementation of the present invention groups tasks, where possible, into virtual address space groups. A virtual address group is sized so that all the tasks in the group are cacheable, together, at any given time in L1$ 201. This feature requires that such tasks can be relocated at load time. Using this implementation, so long as context switches occur only between tasks within a single virtual address group, L1$ 201 does not need to be flushed. L1$ 201 will need to be flushed whenever a group-to-group context switch occurs. The memory manager in accordance with the present invention can further improve performance by recording how much heap space each task normally requires and use this information when the tasks are subsequently executed. The operating system can use this historical information to allocate memory to the task such that compatibility within a virtual address space group is more optimal.

On the odd occasion where a task exceeds its allotted virtual address space (e.g., the stack area and/or heap area expands unexpectedly) the task is removed to its own separate virtual address space group. All virtual addresses must be flushed from L1$ 201 when a context switch occurs that involves two separate virtual address space groups, but this is expected to be a rare occurrence in many practical environments running a stable set of tasks.

So long as all the tasks in a virtual address space group are selected to have compatible virtual address requirements, L1$ 201 accesses can be performed in an unchecked manner (i.e., no special effort need be made to ensure that a virtual address does not refer to an out of context memory location). However, a program bug could cause an access to be an out of context access, which would not normally be valid. Trusted programs, such as the Java VM, can be relied on to not generate any such accesses. However, procedure or native code programs such as C-language programs are not trusted and so should be forced into separate address space groups to avoid them breaching execution integrity.

The examples of FIG. 4 and FIG. 5 deal with Java language or similar programming language in which the stack data structures are allocated from within the heap data structure. FIG. 7 shows how a C-language task can be organized in such a way that all the code and data structures are mapped into virtual address. The task's data structures are allocated in the middle of the high virtual address space so that the stack can be expanded downward and the heap can be expanded upward if need be.

Although the invention has been described and illustrated with a certain degree of particularity, it is understood that the present disclosure has been made only by way of example, and that numerous changes in the combination and arrangement of parts can be resorted to by those skilled in the art without departing from the scope of the invention, as hereinafter claimed.

## Claims

1. A method for operating a memory in a computing system (100) having a defined virtual address space, the computing system including a physical memory (110), the method comprising the steps of:
partitioning the virtual address space into an upper portion and a lower portion; mapping all of the physical memory to the lower portion of the virtual address space;
initiating execution of a first task, the first task comprising code, static data, and heap data structures; and
in response to initiating execution:
copying the code data structures of the first task to the physical memory; allocating a first contiguous region of the physical memory to the first task's data structures; and
mapping the first contiguous region of the physical memory into a segment in the upper portion of the virtual address space.

2. The method of claim 1 wherein the allocating is performed so that the first contiguous region is sized to hold all of the first task's data structures.

3. The method of claim 1 or claim 2 further comprising the steps of:
in response to the first task requesting an extension to its heap data structure that is larger than its current contiguous region, determining whether a region of the physical memory immediately adjacent to the allocated region is available; and
allocating the region of the physical memory immediately adjacent to the allocated region to the first task's heap data structure when the immediately adjacent address space is available.

4. The method of claim 1 or claim 2 further comprising the steps of:
in response to the first task requesting a heap data structure that is larger than the first contiguous region, determining whether a region of the physical memory immediately adjacent to the allocated region is available; and
when address space of the region of the physical memory immediately adjacent to the allocated region is not available:
allocating a second contiguous region of the physical memory to the first task; and
moving all of the first task's data structures to the second contiguous region of the physical memory.

5. The method of claim 4 further comprising the step of compacting the physical memory to create sufficient contiguous free space in the physical memory in which to allocate the second contiguous region.

6. The method of claim 4 or claim 5 wherein allocating the second contiguous region is performed so that the second contiguous region is sized to hold all of the first task's requested larger heap data structure.

7. The method of any preceding claim wherein the first task further comprises at least one stack data structure having a pre-selected capacity, and the method further comprises the steps of:
allocating from within the heap data structure an area for holding the at least one stack data structure;
pushing data onto the at least one stack data structure;
determining if data pushed onto the at least one stack data structure exceeds its capacity;
relocating the at least one stack the data structure within the heap data structure; and
expanding the relocated stack data structure to have a capacity sufficient to hold the data being pushed.

8. The method of any one of claims 1 to 6 wherein the first task further comprises at least one stack data structure having a pre-selected capacity, and the method further comprises the steps of;
allocating from within the heap data structure a first area for holding the at least one stack data structure;
pushing data onto the at least one stack data structure;
determining if the data pushed onto the at least one stack data structure exceeds its capacity; and
allocating from within the heap data structure a second area for holding a portion of the stack data structure that exceeds the capacity of the first allocated area.

9. The method of claim 7 wherein the step of relocating further comprises:
identifying an area within the heap data structure having sufficient free area to accommodate the expanded stack data structure.

10. The method of claim 7 wherein the step of relocating further comprises:
requesting a heap data structure that is larger than the first contiguous region so that the requested heap data structure size includes sufficient free area to accommodate the expanded stack data structure.

11. The method of any preceding claim further comprising the steps of:
prior to the execution of the first task, determining from records of prior executions of the first task a historical target size of the heap data structure; and
performing the allocating step so that the first contiguous region is at least as large as the historical target size.

12. The method of any preceding claim further comprising the steps of:
initiating execution of a second task, the second task comprising code, static data, and heap data structures;
in response to initiating execution of the second task:
copying the code, static data and heap data structures of the second task to the physical memory;
mapping the first contiguous region of the physical memory into a segment in the upper portion of the virtual address space.

13. A memory manager comprising:
a virtual address space partitioned into an upper portion and a lower portion;
a plurality of tasks each comprising code, static data and heap data structures, each task structure occupying an area of virtual address space;
a physical memory (110) comprising a plurality of locations, wherein the physical memory is partitioned as at least one atomic segment having a size determined by the heap data structure of one of the plurality of tasks;
a memory map mapping each segment of the physical memory directly to the upper portion of the virtual address space and to an aliased location in the lower portion of the virtual address space.

14. The memory manager of claim 13 wherein each segment of the physical memory is sized such that the heap data structure of one of the plurality of tasks is implemented in segment of contiguous locations in the physical memory.

15. The memory manager of claim 13 or claim 14, wherein tasks are able to request additional virtual address space for the task's heap data structure and the manager further comprises:
an analysis device operative to determine if an amount of the physical address space is sufficient to satisfy the task's request and if a region of the physical address immediately adjacent to the physical memory segment mapped to the task's heap data structure is available; and
an allocating device responsive to the analysis device and operative to alter the memory map to increase the size of the at least one atomic segment such that the task's heap data structure is sized to satisfy the task's request.

16. The memory manager of claim 13 or claim 14, wherein tasks are able to request additional virtual address space for the task's heap data structure and the manager further comprises:
an analysis device operative to determine if an amount of the physical address space is sufficient to satisfy the task's request if a region of the physical address and immediately adjacent to the physical memory segment mapped to the task's heap data structure is available;
an allocating device responsive to the analysis device and operative to map a second contiguous region of the physical memory to the task's heap data structure; and
a copying device responsive to the allocating device and operative to the task's heap data structure in its entirety to the second contiguous region of the physical memory.

17. The memory manager of claim 16 further comprising a compacting device operatively coupled to the physical memory and to the memory map to defragment the physical memory.

18. The memory manager of claim 16 or claim 17 wherein the second contiguous region is sized to hold all of the task's requested larger heap data structure.

19. The memory manager of any one of claims 13 to 18 wherein the physical memory comprises a physically addressed main memory and a virtually addressed main memory cache.

20. A computer system comprising:
a data processor;
a main memory coupled to the processor comprising a plurality of physically addressed memory locations;
a task loaded in the main memory comprising a code data structure, a static data structure and a heap data structure;
a memory manager device as claimed in any one of claims 13 to 19 coupled to the memory to selectively relocate the task's heap data structures within the main memory by relocating the entire data structures as a unit from a first physical address space to a second virtual address space without paging.

21. A computer data signal embodied in a carrier wave coupled to a computer for managing memory in the computer, the computer data signal comprising code performing all the steps of the method of claim 1.

## Patentansprüche

1. Verfahren zum Betreiben eines Speichers in einem Computersystem (100) mit einem definierten virtuellen Adressraum, wobei das Computersystem einen physikalischen Speicher (110) aufweist, welches Verfahren die Schritte enhält:
Aufteilen des virtuellen Adressraumes in einen oberen Abschnitt und einen unteren Abschnitt;
Abbilden des gesamten physikalischen Speichers auf den unteren Abschnitt des virtuellen Adressraums;
Auslösen der Ausführung einer ersten Aufgabe, welche erste Aufgabe Code, statische Daten und Halden-Datenstrukturen umfasst; und
in Reaktion auf das Auslösen der Ausführung:
Kopieren der Code-Datenstrukturen der ersten Aufgabe in den physikalischen Speicher;
Zuordnen eines ersten benachbarten Bereichs des physikalischen Speichers zu den Datenstrukturen; und
Abbilden des ersten benachbarten Bereichs des physikalischen Speichers auf ein Segment in dem oberen Abschnitt des virtuellen Adressraums.

2. Verfahren nach Anspruch 1, wobei die Zuordnung so ausgeführt wird, dass der erste benachbarte Bereich so dimensioniert ist, alle Datenstrukturen der ersten Aufgabe zu halten.

3. Verfahren nach Anspruch 1 oder 2, ferner aufweisend die Schritte:
in Reaktion auf die erste Aufgabe Anfordern einer Erweiterung zu deren Halden-Datenstruktur, die größer ist als deren derzeitiger benachbarter Bereich, Bestimmen, ob ein Bereich des physikalischen Speichers unmittelbar benachbart dem zugeordneten Bereich verfügbar ist; und Zuordnen des Bereichs des physikalischen Speichers unmittelbar benachbart zu dem zugeordneten Bereich zu der Halden-Datenstruktur der ersten Aufgabe, wenn der unmittelbar benachbarte Adressraum verfügbar ist.

4. Verfahren nach Anspruch 1 oder 2, ferner aufweisend die Schritte:
in Reaktion auf die erste Aufgabe des Anforderns einer Halden-Datenstruktur, die größer als der erste benachbarte Bereich ist, Bestimmen, ob ein Bereich des physikalischen Speichers unmittelbar benachbart zu dem zugewiesenen Bereich verfügbar ist; und
wenn Adressraum des Bereichs des physikalischen Speichers unmittelbar benachbart zu dem zugewiesenen Bereich nicht verfügbar ist:
Zuweisen eines zweiten benachbarten Bereichs des physikalischen Speichers zu der ersten Aufgabe; und
Bewegen aller Datenstrukturen der ersten Aufgabe zu dem zweiten benachbarten Bereich des physikalischen Speichers.

5. Verfahren nach Anspruch 4, ferner aufweisend den Schritt des Verdichtens des physikalischen Speichers, um genügend benachbarten Freiraum in dem physikalischen Speicher zu schaffen, welchem der zweite benachbarte Bereich zugeordnet wird.

6. Verfahren nach Anspruch 4 oder 5, wobei die Zuweisung des zweiten benachbarten Bereichs so ausgeführt wird, dass der zweite benachbarte Bereich so dimensioniert ist, alle angeforderten größeren Halden-Datenstrukturen der ersten Aufgabe zu halten.

7. Verfahren nach einem der vorangehenden Ansprüche, wobei die erste Aufgabe ferner wenigstens eine Stapel-Datenstruktur mit einer vorher festgelegten Kapazität aufweist, und das Verfahren ferner die Schritte aufweist:
Zuordnen von innerhalb der Halden-Datenstruktur eines Bereichs zum Halten der wenigstens einen Stapel-Datenstruktur;
Verschieben der Daten auf die wenigstens eine Stapel-Datenstruktur; Bestimmung, ob die auf die wenigstens eine Stapel-Datenstruktur verschobenen Daten dessen Kapazität übersteigen;
Umsetzen der wenigstens einen Stapel-Datenstruktur innerhalb der Halden-Datenstruktur; und
Aufweiten der umgesetzten Stapel-Datenstruktur, so dass sie eine genügende Kapazität aufweist, um die verschobenen Daten zu halten.

8. Verfahren nach einem Ansprüche 1 bis 6, wobei die erste Aufgabe ferner wenigstens eine Stapel-Datenstruktur mit einer vorher festgelegten Kapazität umfasst, und das Verfahren ferner die Schritte aufweist:
Zuordnen von innerhalb der Halden-Datenstruktur eines Bereichs zum Halten der wenigstens einen Stapel-Datenstruktur;
Verschieben der Daten auf die wenigstens eine Stapel-Datenstruktur; Bestimmung, ob die auf die wenigstens eine Stapel-Datenstruktur verschobenen Daten dessen Kapazität übersteigen; und
Zuordnen eines zweiten Bereichs von innerhalb der Halden-Datenstruktur zum Halten eines Abschnitts der Stapel-Datenstruktur, der die Kapazität des ersten zugeordneten Bereichs übersteigt.

9. Verfahren nach Anspruch 7, wobei der Schritt des Umsetzens ferner aufweist:
Identifizierung eines Bereichs innerhalb der Halden-Datenstruktur, der genügend freien Raum umfasst, um die aufgeweitete Stapel-Datenstruktur aufzunehmen.

10. Verfahren nach Anspruch 7, wobei der Schritt des Umsetzens ferner umfasst:
Anfordern einer Halden-Datenstruktur, die größer ist als der erste benachbarte Bereich, so dass die angeforderte Halden-Datenstrukturgröße genügend freien Raum umfasst, um die aufgeweitete Stapel-Datenstruktur aufzunehmen.

11. Verfahren nach einem der vorangehenden Ansprüche, ferner aufweisend die Schritte:
vor der Ausführung der ersten Aufgabe, Bestimmung einer historischen Zielgröße der Halden-Datenstruktur aus Aufzeichnungen früherer Ausführungen der ersten Aufgabe; und
Ausführung des Zuordnungsschritts, so dass der erste benachbarte Bereich wenigstens so groß wie die historische Zielgröße ist.

12. Verfahren nach einem der vorangehenden Ansprüche ferner aufweisend die Schritte:
Auslösen der Ausführung einer zweiten Aufgabe, welche zweite Aufgabe Code, statische Daten und Halden-Datenstrukturen umfasst;
in Reaktion auf das Auslösen der Ausführung der zweiten Aufgabe:
Kopieren des Codes, der statischen Daten und der Halden-Datenstrukturen der zweiten Aufgabe auf den physikalischen Speicher;
Abbilden des ersten benachbarten Bereichs des physikalischen Speichers auf ein Segment in den oberen Abschitt des virtuellen Adressraums.

13. Speichermanager aufweisend:
einen virtuellen Adressraum, der in einen oberen Abschnitt und einen unteren Abschnitt aufgeteilt ist;
mehrere Aufgaben, die jeweils Code, statische Daten und Halden-Datenstrukturen aufweisen, wobei jede Aufgabenstruktur einen Bereich eines virtuellen Adressraumes belegt;
einen physikalischen Speicher (110) aufweisend mehrere Orte, wobei der physikalische Speicher aufgeteilt ist in wenigstens ein atomares Segment mit einer durch die Halden-Datenstruktur einer der mehreren Aufgaben bestimmten Größe;
eine Speicherabbildung, die jedes Segment des physikalischen Speichers direkt auf den oberen Abschnitt des virtuellen Adressraums und einen Alias-Bereich in dem unteren Abschnitt des virtuellen Adressraums abbildet.

14. Speichermanager nach Anspruch 13, wobei jedes Segment des physikalischen Speichers so dimensioniert ist, dass die Halden-Datenstruktur eines der mehreren Aufgaben in einem Segment der benachbarten Bereiche im physikalischen Speicher implementiert ist.

15. Speichermanager nach Anspruch 13 oder 14, wobei Aufgaben in der Lage sind, zusätzlichen virtuellen Adressraum von der Halden-Datenstruktur der Aufgabe anzufordern und der Manager ferner aufweist:
eine Analysevorrichtung, die ausgebildet ist, zu bestimmen, ob eine Menge des physikalischen Adressraums ausreichend ist, um die Anforderung der Aufgabe zu befriedigen und ob ein Bereich des physikalischen Adressraums unmittelbar benachbart dem physikalischen Speichersegment, das auf die Halden-Datenstruktur der Aufgabe abgebildet ist, verfügbar ist; und
eine Zuordnungsvorrichtung, die in Reaktion auf die Analyseeinrichtung ausgebildet ist, die Speicherabbildung zu verändern, um die Größe wenigstens eines atomaren Segments zu erhöhen, so dass die Halden-Datenstruktur der Aufgabe dimensioniert ist, um die Anforderung der Aufgabe zufrieden zu stellen.

16. Speichermanager nach Anpruch 13 oder 14, wobei die Aufgaben in der Lage sind, zusätzlichen virtuellen Adressraum für die Halden-Datenstruktur der Aufgabe anzufordern und der Manager ferner aufweist:
eine Analysevorrichtung, die ausgebildet ist, zu bestimmen, ob eine Menge des physikalischen Adressraums ausreichend ist, um die Anforderung der Aufgabe zu befriedigen und ob ein Bereich des physikalischen Adressraums unmittelbar benachbart dem physikalischen Speichersegment, das auf die Halden-Datenstruktur der Aufgabe abgebildet ist, verfügbar ist; und
eine Zuordnungseinrichtung, die auf die Analyseeinrichtung antwortet und ausgebildet ist, einen zweiten benachbarten Bereich des physikalischen Speichers auf die Halden-Datenstruktur der Aufgabe abzubilden; und
eine Kopiereinrichtung, die auf die Zuordnungseinrichtung antwortet und
ausgebildet ist, die Halden-Datenstruktur in ihrer Gesamtheit in den zweiten benachbarten Bereich des physikalischen Speichers zu kopieren.

17. Speichermanager nach Anspruch 16, ferner aufweisend eine Verdichtungseinrichtung, die funktionell mit dem physikalischen Speicher und der Speicherabbildung gekoppelt ist, um den physikalischen Speicher zu defragmentieren.

18. Speichermanager nach Anspruch 16 oder 17, wobei der zweite benachbarte Bereich dimensioniert ist, alle angeforderten größeren Halden-Datenstrukturen der Aufgabe zu halten.

19. Speichermanager nach einem der Ansprüche 13 bis 18, wobei der physikalische Speicher einen physikalisch adressierten Hauptspeicher und einen virtuell adressierten Hauptspeicher-Chache aufweist.

20. Computersystem aufweisend:
einen Datenprozessor;
einen zu dem Prozessor gekoppelten Hauptspeicher, der mehrere physikalisch adressierte Speicherbereiche aufweist;
eine in den Hauptspeicher geladene Aufgabe, die Codedaten, eine statische Datenstruktur und eine Halden-Datenstruktur umfasst;
eine Speichermanagervorrichtung gemäß einem der Ansprüche 13 bis 19, die zu dem Speicher gekoppelt ist, um selektiv die Halden-Datenstrukturen der Aufgabe innerhalb des Hauptspeichers durch Umsetzen der gesamten Datenstrukturen als eine Einheit von einem ersten physikalischen Adressraum zu einem zweiten virtuellen Adressraum ohne Seitenwechsel umzusetzen.

21. Computerdatensignal enthalten in einer Trägerwelle gekoppelt mit einem Computer zum Verwalten eines Speichers in dem Computer, wobei das Computerdatensignal Code zur Ausführung aller Schritte des Verfahrens nach Anspruch 1 enthält.

## Revendications

1. Procédé pour faire fonctionner une mémoire dans un système informatique (100) ayant un espace d'adresse virtuelle défini, le système informatique incluant une mémoire physique (110), le procédé comportant les étapes consistant à :
subdiviser l'espace d'adresse virtuelle en une partie supérieure et une partie inférieure,
faire une projection de l'ensemble de la mémoire physique dans la partie inférieure de l'espace d'adresse virtuelle,
lancer l'exécution d'une première tâche, la première tâche comportant des structures de données de code, de données statiques, et de données en tas, et
en réponse au lancement de l'exécution :
copier les structures de données de code de la première tâche dans la mémoire physique,
attribuer une première région contiguë à la mémoire physique aux structures de données de la première tâche, et
faire une projection de la première région contiguë à la mémoire physique dans un segment de la partie supérieure de l'espace d'adresse virtuelle.

2. Procédé selon la revendication 1, dans lequel l'attribution est effectuée de sorte que la première région contiguë est dimensionnée pour conserver l'ensemble des structures de données de la première tâche.

3. Procédé selon la revendication 1 ou la revendication 2, comportant en outre les étapes consistant à :
en réponse à la première tâche demandant une extension jusqu'à sa structure de données en tas qui soit supérieure à sa région contiguë courante, déterminer si une région de la mémoire physique immédiatement adjacente à la région attribuée est disponible, et
attribuer la région de la mémoire physique immédiatement adjacente à la région attribuée à la structure de données en tas de la première tâche lorsque l'espace d'adresse immédiatement adjacent est disponible.

4. Procédé selon la revendication 1 ou la revendication 2 comportant en outre les étapes consistant à :
en réponse à la première tâche demandant une structure de données en tas qui soit supérieure à la première région contiguë, déterminer si une région de la mémoire physique immédiatement adjacente à la région attribuée est disponible, et
lorsque l'espace d'adresse de la région de la mémoire physique immédiatement adjacent à la région attribuée n'est pas disponible :
attribuer une seconde région contiguë à la mémoire physique à la première tâche, et
déplacer l'ensemble des structures de données de la première tâche vers la seconde région contiguë de la mémoire physique.

5. Procédé selon la revendication 4, comportant en outre l'étape consistant à compacter la mémoire physique pour créer un espace libre contigu suffisant dans la mémoire physique dans laquelle attribuer la seconde région contiguë.

6. Procédé selon la revendication 4 ou la revendication 5, dans lequel l'attribution de la seconde région contiguë est effectuée de sorte que la seconde région contiguë est dimensionnée pour conserver l'ensemble de la structure de données en tas supérieure demandée par la première tâche.

7. Procédé selon l'une quelconque des revendications précédentes, dans lequel la première tâche comporte en outre au moins une structure de données en pile ayant une capacité présélectionnée, et le procédé comporte en outre les étapes consistant à :
attribuer à partir de la structure de données en tas une zone pour conserver la au moins une structure de données en tas,
empiler des données sur la au moins une structure de données en pile,
déterminer si des données empilées sur la au moins une structure de données en pile dépassent sa capacité,
transférer la au moins une structure de données en pile vers la structure de données en tas, et
étendre la structure de données en pile transférée pour disposer d'une capacité suffisante pour conserver les données étant empilées.

8. Procédé selon l'une quelconque des revendications 1 à 6, dans lequel la première tâche comporte en outre au moins une structure de données en pile ayant une capacité présélectionnée, et le procédé comporte en outre les étapes consistant à :
attribuer à partir de la structure de données en tas une première zone pour conserver la au moins une structure de données en pile,
empiler des données sur la au moins une structure de données en pile,
déterminer si les données empilées sur la au moins une structure de données en pile dépassent sa capacité, et
attribuer à partir de la structure de données en tas une seconde zone pour conserver une partie de la structure de données en pile qui dépasse la capacité de la première zone attribuée.

9. Procédé selon la revendication 7, dans lequel l'étape consistant à transférer comporte en outre l'étape consistant à :
identifier une zone comprise dans la structure de données en tas ayant une zone libre suffisante pour contenir la structure de données en pile étendue.

10. Procédé selon la revendication 7, dans lequel l'étape consistant à transférer comporte en outre l'étape consistant à :
demander une structure de données en tas qui soit supérieure à la première région contiguë de sorte que la taille de la structure de données en tas demandée inclut une zone libre suffisante pour contenir la structure de données en pile étendue.

11. Procédé selon l'une quelconque des revendications précédentes comportant en outre les étapes consistant à :
préalablement à l'exécution de la première tâche, déterminer à partir d'enregistrements d'exécutions antérieures de la première tâche une taille cible d'historique de la structure de données en tas, et
exécuter l'étape d'attribution de sorte que la première région contiguë est au moins aussi grande que la taille cible d'historique.

12. Procédé selon l'une quelconque des revendications précédentes, comportant en outre les étapes consistant à :
lancer l'exécution de la seconde tâche, la seconde tâche comportant des structures de données de code, de données permanentes, et de données en tas,
en réponse au lancement de l'exécution de la seconde tâche :
copier les structures de données de code, de données permanentes et de données en tas de la seconde tâche dans la mémoire physique,
faire une projection de la première région contiguë à la mémoire physique dans un segment de la partie supérieure de l'espace d'adresse virtuelle.

13. Gestionnaire de mémoire comportant :
un espace d'adresse virtuelle subdivisé en une partie supérieure et une partie inférieure,
une pluralité de tâches chacune comportant des structures de données de code, de données permanentes et de données en tas, chaque structure de tâche occupant une zone de l'espace d'adresse virtuelle,
une mémoire physique (110) comportant une pluralité d'emplacements, la mémoire physique étant subdivisée en au moins un segment atomique ayant une taille déterminée par la structure de données en tas de l'une parmi la pluralité de tâches,
une carte mémoire faisant une projection de chaque segment de la mémoire physique directement dans la partie supérieure de l'espace d'adresse virtuelle et dans un emplacement ayant un pseudonyme attribué de la partie inférieure de l'espace d'adresse virtuelle.

14. Gestionnaire de mémoire selon la revendication 13, dans lequel chaque segment de la mémoire physique est dimensionné de sorte que la structure de données en tas de l'une parmi la pluralité de tâches est implémentée en segment d'emplacements contigus dans la mémoire physique.

15. Gestionnaire de mémoire selon la revendication 13 ou la revendication 14, dans lequel des tâches sont capables de demander un espace d'adresse virtuelle supplémentaire pour la structure de données en tas de la tâche et le gestionnaire comporte en outre :
un dispositif d'analyse opérationnel pour déterminer si une quantité de l'espace d'adresse physique est suffisante pour satisfaire la demande de tâche et si une région de l'adresse physique immédiatement adjacente au segment de mémoire physique projeté dans la structure de données en tas de la tâche est disponible, et
un dispositif d'attribution sensible au dispositif d'analyse et opérationnel pour modifier la carte mémoire afin d'augmenter la taille d'au moins un segment atomique de sorte que la structure de données en tas de la tâche est dimensionnée pour satisfaire la demande de la tâche.

16. Gestionnaire de mémoire selon la revendication 13 ou la revendication 14, dans lequel des tâches sont capables de demander un espace d'adresse virtuelle supplémentaire pour la structure de données en tas de la tâche et le gestionnaire comporte en outre :
un dispositif d'analyse opérationnel pour déterminer si une quantité de l'espace d'adresse physique est suffisante pour satisfaire la demande de la tâche et si une région de l'adresse physique immédiatement adjacente au segment de mémoire physique projeté dans la structure de données en tas de la tâche est disponible,
un dispositif d'attribution sensible au dispositif d'analyse et opérationnel pour faire une projection d'une seconde région contiguë de la mémoire physique dans la structure de données en tas de la tâche, et
un dispositif de copie sensible au dispositif d'attribution et opérationnel pour faire une projection de la structure de données en tas de la tâche dans son intégralité dans la seconde région contiguë de la mémoire physique.

17. Gestionnaire de mémoire selon la revendication 16, comportant en outre un dispositif de compactage couplé en fonctionnement à la mémoire physique et à la carte mémoire pour défragmenter la mémoire physique.

18. Gestionnaire de mémoire selon la revendication 16 ou la revendication 17, dans lequel la seconde région contiguë est dimensionnée pour conserver l'ensemble de la structure de données en tas supérieure demandée par la tâche.

19. Gestionnaire de mémoire selon l'une quelconque des revendications 13 à 18, dans lequel la mémoire physique comporte une mémoire principale adressée physiquement et une mémoire cache principale adressée virtuellement.

20. Système informatique comportant :
un processeur de données,
une mémoire principale couplée au processeur comportant une pluralité d'emplacements de mémoire adressés physiquement,
une tâche chargée dans la mémoire principale comportant une structure de données de code,
une structure de données permanentes et une structure de données en tas,
un dispositif de gestion de mémoire selon l'une quelconque des revendications 13 à 19 couplé à la mémoire pour transférer sélectivement les structures de données en tas de la tâche dans la mémoire principale en transférant les structures de données entières sous forme d'unité depuis un premier espace d'adresse physique vers un second espace d'adresse virtuelle sans pagination.

21. Signal de données informatiques mis en application dans une onde porteuse couplée à un ordinateur pour gérer une mémoire dans l'ordinateur, le signal de données informatiques comportant un code exécutant toutes les étapes du procédé de la revendication 1.
